Europäisches Patentamt

(19) European Patent Office

Office européen des brevets

(11) Publication number: **0 169 959**
**B1**

(12) **EUROPEAN PATENT SPECIFICATION**

(45) Date of publication of patent specification: 05.04.89

(21) Application number: 85100064.6

(22) Date of filing: 03.01.85

(51) Int. Cl.⁴: **B 41 M 3/16,** G 09 B 21/02,
**B 41 J 3/32**

(54) **Braille print board.**

(30) Priority: 29.06.84 JP 134945/84

(43) Date of publication of application:
**05.02.86 Bulletin 86/06**

(45) Publication of the grant of the patent:
**05.04.89 Bulletin 89/14**

(84) Designated Contracting States:
**DE FR GB IT**

(56) References cited:
**GB-A-1 477 543**
**US-A-3 340 625**
**US-A-4 277 239**

**PATENT ABSTRACTS OF JAPAN, unexamined
applications, section M, vol. 6, no. 117, June 30,
1982, THE PATENT OFFICE JAPANESE
GOVERNMENT**

(73) Proprietor: **Okada, Chozo
23-20, Yagiyamahoncho 1-chome
Sendai-shi Miyagi-ken (JP)**

(72) Inventor: **Okada, Chozo
23-20, Yagiyamahoncho 1-chome
Sendai-shi Miyagi-ken (JP)**

(74) Representative: **Wey, Hans-Heinrich, Dipl.-Ing.
et al
Patentanwälte Wey & Partner
Widenmayerstrasse 49
D-8000 München 22 (DE)**

## Description

The invention relates to a braille print board comprising a support plate having holes corresponding to six-dot-groups of braille letters, bores within the groups of holes to form protrusions on a first surface of the support plate according to the braille letters, and a cover sheet fixed to a second surface of the support plate. The invention also relates to an arrangement of two such braille print boards, as well as to a method for making such a braille print board.

When writing braille in the conventional manner, a braille printer comprising a tablet, a scale and a pen or a braille typewriter is used to project the braille letters from the back of a sheet of paper in horizontal lines from right to left. When reading braille text, one touches the raised points with the index finger successively from left to right. Although above mentioned braille typewriter and braille stereotype printer have been available for some time, their high prices have limited their wide-spread use. Thus, blind people had to continue being dependant on the handmade copies offered by volunteer braille writers.

Printing in braille is achieved by printing braille letters on lines equally spaced apart, and then printing on the back of the sheet between the lines of the front side, so that the sheets are printed on both sides with braille letters. Printing using a braille stereotype printer was therefore cumbersome in that the sheet of paper printed on the front first had to be reversed for printing on the back between the lines of braille letters formed on the front of the paper.

As the braille stereotype of the above kind could not be used repeatedly, this increased the volume of transcription to braille if the number of copies to be issued was to be increased.

The inventor of the present application already proposed an improved stereotype disclosed in Japanese Patent Application laid open under Sho-57-43894 and Utility Model Application laid open under Sho 58-48436. While the braille stereotype did improve workability of the conventional method, there still remained problems for the braille writers.

In the first mentioned disclosure, a plastic board was used having the same thickness as the projection height of a braille letter, having formed continuous lines of holes for braille letters, one six dot group corresponding to the eye of a braille letter representing one character, adhered an adhesive tape over the line, and hard balls placed inside said braille letters to cause respective 6-dot groups of dot cells to represent one braille letter. Alternatively, balls are retained by utilizing adhesive force of the tape, and then balls not needed are removed. In the second disclosure, the tape adhered over the dot cells of the braille board to retain the balls in the dot cells, and removed unneeded dot balls through the adhesive tape.

In order to remove the balls from the cells, a pen, etc. with a ball point is used. However, removing the ball by breaking through the adhesive tape was found quite difficult. Since the braille system depends a lot on the manual work of the volunteers as mentioned above, excellent workability is a requisite for diffusion of the braille system and increase of volunteer workers.

The present invention was contrived as an improvement over the braille board proposed by the present inventor, and it facilitates an efficient printing of braille letters and suggests a braille stereotype which can be stored for repeated use as the original plate.

The present invention further aims at providing a print board which can be recycled to thereby reduce the cost of braille printed materials.

The present invention also aims at providing a braille print board which can easily be duplicated.

The above objects are being solved by a braille print board of the kind described above, which is characterized by a deformable retaining sheet fixed to the first surface of the support plate; by the balls being selectively inserted in the holes for selective deformation of the retaining sheet according to the braille letters; and by the cover sheet being fixed onto the support plate covering the holes as well as the inserted balls.

A preferred embodiment of the braille print board is characterized by an adhesive sheet applied to the second surface of the supply plate, the adhesive sheet being punchable to allow selective insertion of balls.

Such a braille print board according to the invention has the advantage that the braille letters do not get crushed, even if a great number of papers are being printed, and the printing appears in a beautiful and easy to read finish.

If printing is desired from both sides of a sheet of paper, an arrangement of two braille print boards according to the invention is being used, printing from both sides onto the sheet of paper.

A preferred method for making a braille print board according to the invention is characterized by placing a supply plate having a plurality of holes holding a ball each over the support plate, by placing a guide plate having a plurality of guide holes over the supply plate, and by selectively punching the balls of the supply plate into the support plate to form the braille letters.

If a braille print board is to be duplicated, a preferred method can be used, which is characterized by placing the first braille print board instead of the guide plate onto the supply plate and pressing it down to selectively punch the balls of the supply plate into the support plate of the second braille print board.

On the other hand, if it is unnecessary to store the original printing plate, the ball retaining sheet may be peeled to recover the balls for recycling of both the braille plate and balls.

In the drawings,

Figs. 1 to 3 relate to a first embodiment, and more particularly Fig. 1 is a perspective view of a braille print board;

Fig. 2 is a cross sectional view along the line 2—2 of Fig. 1; and

Figs. 3A to 3D are cross sectional views to explain the steps of mounting balls into the print board;

Figs. 4 and 5 denote a second embodiment, and more particularly Fig. 4 shows a supply plate of the print board, a ball supply plate and a hole guide plate in perspective view;

Figs. 5A to 5C are cross sectional views showing the steps of mounting balls in the print board;

Fig. 6 is a perspective view of a braille stereotype manufactured in accordance with an aspect of the invention and assembled for printing.

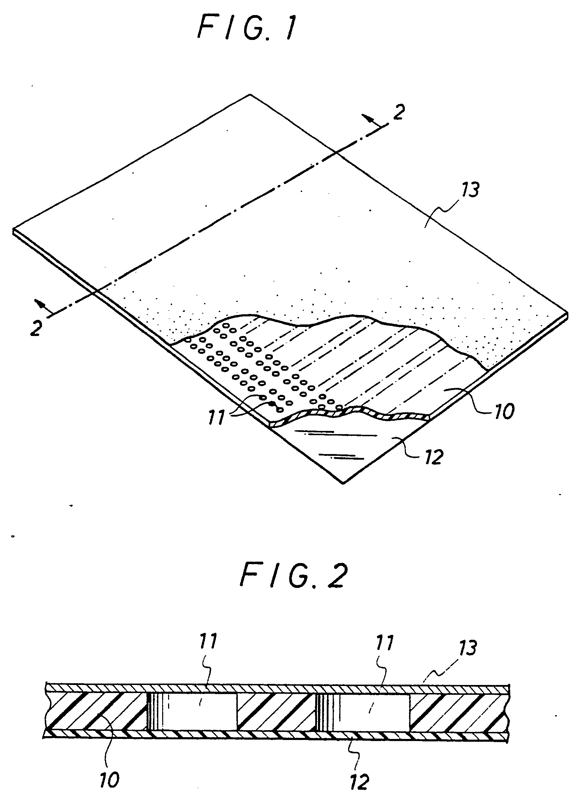

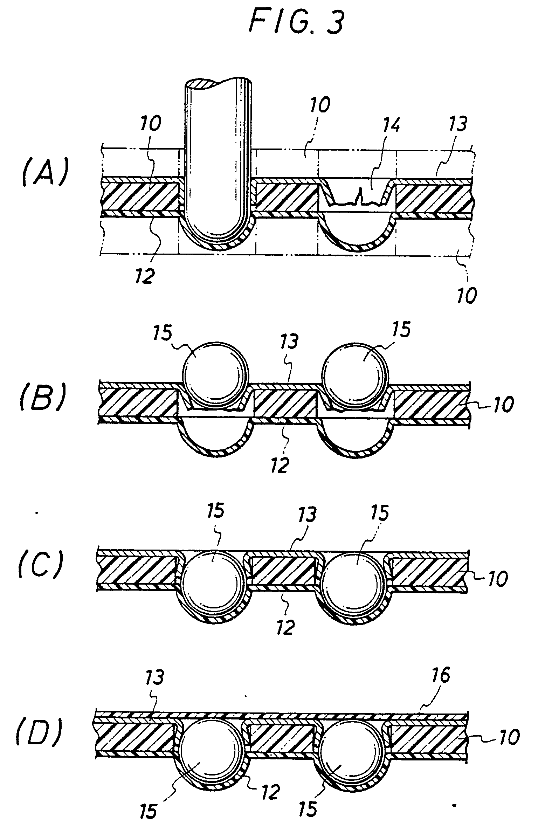

Referring to Fig. 1, a support plate 10 made of hard plastic is provided with dot cells 11, six dots each forming a group in continuous horizontal lines of a prescribed number. On one surface of the original support plate 10 is pasted a retaining sheet 12 made of vinyl chloride or the like for dot balls, and the other surface is pasted with an adhesive sheet 13. The sheet 13 is coated with an adhesive agent of a property which remains on the side of the paper when peeled. In order to print out the braille letters on the support plate 10 thus constructed, the sheet 13 is positioned with surface turned upward, and dot holes 14 are punched toward the dot cells 11 of the support plate 10 (Fig. 3A). Since the braille letters are to be read from left to right, the dot holes 14 are to be pressed out from right to left by using a braille pen or typewriter. A braille typewriter has a standard arrangement of braille letters, and if the dot cells 11 are formed in accordance with the standard on the adhesive sheet 13, then the braille letters can be typed out on the sheet 13 directly with the typewriter. On the other hand, since the braille pen has a round point, it may be used to press out the dot holes 14 by using the holes on the original printing plate 10 overlaid with another original printing plate as a guide (which is not pasted with the retaining sheet for dot balls) and by registering the positions of the dot holes.

Upon completion of the pressing operation of desired dot holes 14 on all the lines of the support plate 10, balls 15 are placed inside the dot holes (Fig. 3B).

Balls 15 are then pressed in toward the ball retaining sheet 12 in order to stabilize the balls (Fig. 3C), and then a cover sheet 16 is pasted over the dot hole (adhesive) sheet 13 which has become flat (Fig. 3D).

The (adhesive) dot hole sheet 13 becomes torn and is pressed into the hole 14, to support the balls 15 inside the holes 14. Above mentioned balls may preferably be made of metal in view of handling and economy.

The braille stereotype thus made up has braille letters on the side where the balls project, and a blind person can read the text by touching projections with his/her fingers. If there is a need for correction, one has to merely peel the retaining sheet 12 from the projection side and take out the balls 15. If balls are not yet placed inside the holes 14, the sheet 13 is restored to the original state by pressing from the back so that the hole will not be formed. If a hole is to be re-punched, it is easy to do so. This ease in proof-reading characterizes and differentiates the present invention apparatus from the conventional products.

We shall now explain a further embodiment of the invention which uses a plate for supplying balls and a plate with guiding holes in addition to the support plate for facilitating mounting of the balls.

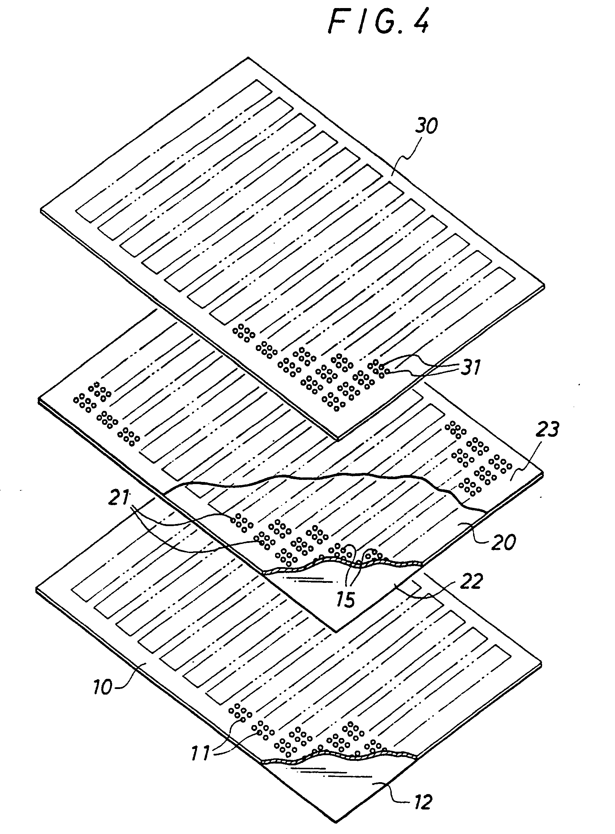

Referring to Fig. 4, a support plate 10, a plate 20 for supplying balls 15 and a guide plate 30 with holes; all these plates having cells 11, 21, 31 in a prescribed number of lines.

The support plate 10 is pasted with a dot ball retaining sheet 12 as in the foregoing embodiment. The ball supply plate 20 is pasted with a ball support sheet 22 made of nylon or polyethylene on the back thereof, and with a sheet of paper 23 provided with viscous paste or glue on the surface thereof. Balls 15 made of steel are then placed into all cells 21.

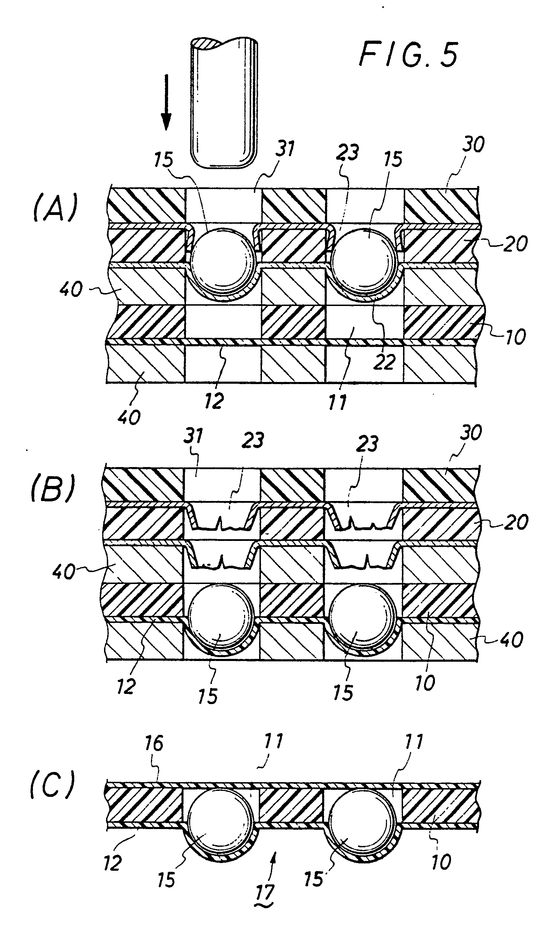

Fig. 5 shows placing of the support plate 10, the supply plate 20 and the guide plate 30 in this order, and a plate 40 having holes throughout its surface is placed between the lower surface of the support plate 10 and the supply plate 20 (Fig. 5A). By pressing the balls 15 of the supply plate 20 during writing of braille letters with a pen or the like through the guide plate 30, the balls 15 are transferred onto the support plate 10 (Fig. 5B). The plate 10 then forms a stereotype 17 for braille printing (Fig. 5C).

The ball supply plate 20 may be recycled for making the next stereotype by supplying new balls to the portions where the balls 15 have been punched out.

The thickness of the support plate 10, the supply plate 20 and the guide plate 30 is respectively set to be at 0.5 mm, the ball retaining sheet 12 and the sheet 16 respectively at 0.05 mm, the ball retaining sheet 22 at 0.1 mm, the pasted paper 23 at 0.1 mm, and the diameter of the balls 15 at 1.2 mm. Therefore, the height of the braille letter rising above the stereotype 17 becomes 0.6 mm or more, thereby securing the minimum height of 0.5 mm for the braille letter when transferred onto the braille printing paper from the stereotype.

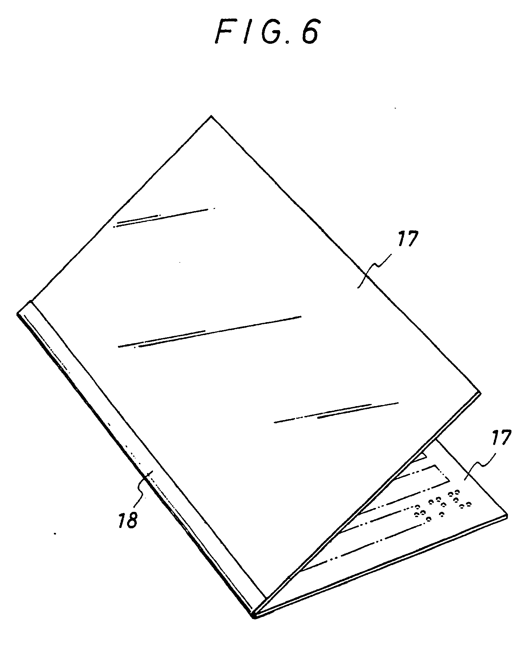

The ball projecting side of the stereotype 17 is pressed onto the printing paper to prepare braille text. Generally, the braille text is prepared by raising the braille dots from the back of the paper on alternate lines, and is read on both surfaces. Therefore, the stereotype 17 is prepared individually both for the front surface and the back surface, and the edges are joined together by tape 18 or the like (Fig. 6). The braille print paper is placed between the sides on which the braille letters are raised, and the stereotypes 17 are pressed by rollers, etc. to effect printing of braille letters simultaneously on the front surface and the back surface of the braille paper.

Use of the stereotype described will enable duplicating the stereotype per se. The original support plate 10 is placed over a punched plate 40 with the ball retaining sheet 12 therebelow, and the ball supply plate 20 mounted with balls is placed on top thereof as well as the stereotype 17 to be duplicated. When the pressure is applied from the above, the raised letters of the original support plate presses the balls of the supply plate 20 out, and are transferred onto a second support plate (copy) to obtain a duplicate plate.

## Claims

1. A braille print board comprising a support plate (10) having holes (11) corresponding to 6-dot-groups of braille letters, balls (15) within the group of holes (11) to form protrusions on a first surface of the support plate according to the braille letters, and a cover sheet (16) fixed to a second surface of the support plate, characterized by a deformable retaining sheet (12) fixed to the first surface of the support plate (10); by the balls (15) being selectively inserted in the holes (11) for selective deformation of the retaining sheet (12) according to the braille letters; and by the cover sheet (16) being fixed onto the support plate (10) covering the holes (11) as well as the inserted balls (15).

2. A braille print board according to claim 1, characterized by an adhesive sheet (13) applied to the second surface of the supply plate (10), the adhesive sheet (13) being punchable to allow selective insertion of balls (15).

3. An arrangement of two braille print boards (17) according to claim 1 or 2 for printing onto both sides of a sheet of paper.

4. An arrangement according to claim 3, characterized by a piece of tape (18) for joining the edges of the two printing boards (17) in a foldable fashion.

5. A method for making a braille print board according to claim 1, characterized by placing a supply plate (20) having a plurality of holes holding a ball (15) each over the support plate (10), by placing a guide plate (30) having a plurality of guide holes over the supply plate (20), and by selectively punching the balls (15) of the supply plate (20) into the support plate (10) to form the braille letters.

6. A method according to claim 5, for copying a first braille print board onto a second braille print board, characterized by placing the first braille print board instead of the guide plate (30) onto the supply plate (20) and pressing it down to selectively punch the balls (15) of the supply plate (20) into the support plate (10) of the second braille print board.

## Patentansprüche

1. Braille-Druckplatte bestehend aus einer Trägerplatte (10) mit Löchern (11), welche den sechs Punkte umfassenden Gruppen der Braille-Schrift entsprechen, aus sich innerhalb der Löchergruppe befindlichen Kugeln (15) zur Bildung von Vorsprüngen entsprechend den Braille-Buchstaben auf einer ersten Fläche der Trägerplatte und aus einem an einer zweiten Fläche der Trägerplatte befestigten Deckblatt (16), gekennzeichnet durch eine verformbare, an der ersten Fläche der Trägerplatte (10) befestigte Haltefolie (12) und dadurch, daß die Kugeln (15) wahlweise in die Löcher (11) zum selektiven Verformen der Haltefolie (12) entsprechend den Braille-Buchstaben eingeführt werden und daß das an der Trägerplatte (10) befestigte Deckblatt (16) sowohl die Löcher (11) als auch die eingeführten Kugeln (15) abdeckt.

2. Braille-Druckplatte gemäß Anspruch 1, gekennzeichnet durch ein an die zweite Fläche der Trägerplatte (10) angebrachtes Haftblatt (13), welches sich zur wahlweisen Einführung der Kugeln (15) stanzen läßt.

3. Anordnung zweier Braille-Druckplatten (17) gemäß Anspruch 1 oder 2 zum beidseitigen Bedrucken eines Papierblatts.

4. Anordnung gemäß Anspruch 3, gekennzeichnet durch ein Stück Klebeband (18) zum faltbaren Zusammenfügen der Ränder der zwei Druckplatten (17).

5. Verfahren zur Herstellung einer Braille-Druckplatte gemäß Anspruch 1, dadurch gekennzeichnet, daß eine Vorratsplatte (20) mit einer Anzahl von jeweils eine Kugel (15) enthaltenden Löchern auf die Trägerplatte (10) gelegt wird, eine eine Anzahl von Führungslöchern aufweisende Führungsplatte (30) auf die Trägerplatte (20) gelegt wird und die Kugeln (15) der Trägerplatte (20) wahlweise in die Trägerplatte (10) zur Bildung der Braille-Buchstaben eingedrückt werden.

6. Verfahren gemäß Anspruch 5 zum Kopieren einer ersten Braille-Druckplatte auf eine zweite Braille-Druckplatte, dadurch gekennzeichnet, daß die erste Braille-Druckplatte anstelle der Führungsplatte (30) auf die Vorratsplatte (20) gelegt und nach unten gedrückt wird, um die Kugeln (15) der Vorratsplatte (20) wahlweise in die Trägerplatte (10) der zweiten Braille-Druckplatte einzudrücken.

## Revendications

1. Planche d'impression Braille, comprenant un plateau-support (10) pourvu de trous (11) correspondant aux groupes de 6 points des lettres Braille, des billes (15) disposées dans les groupes de trous (11) de manière à faire saillie sur une première surface du plateau-support suivant les lettres Braille, et une feuille de couverture (16) fixée sur une seconde surface du plateau-support, caractérisée en ce qu'une feuille déformable (12) de retenue est fixée sur la première surface du plateau-support (10); en ce que les billes (15) sont insérées sélectivement dans les trous (11) de manière à déformer sélectivement la feuille de retenue (12) suivant les lettres Braille; et en ce que la feuille de couverture (16) fixée sur le plateau-support (10) recouvre aussi bien les trous (11) que les billes insérées (15).

2. Planche selon la revendication 1, caractérisée en ce qu'une feuille adhésive (13) est appliquée sur la seconde surface du plateau-support (10), la feuille adhésive (13) pouvant être poinçonnée pour permettre l'insertion sélective de billes (15).

3. Combinaison de deux planches d'impression Braille (17) selon les revendications 1 ou 2 en vue d'une impression sur les deux faces d'une feuille de papier.

4. Combinaison selon la revendication 3, caractérisée en ce qu'un morceau de ruban (18) réunit les bords des deux planches d'impression (17) en formant charnière.

5. Procédé de fabrication d'une planche d'impression en Braille selon la revendication 1, caractérisé en ce qu'on dispose sur le plateau-support (10) un plateau fournisseur (20) pourvu d'une pluralité de trous dont chacun retient une bille (15), on dispose sur le plateau fournisseur un plateau de guidage (30) doté d'une pluralité de trous de guidage, et on chasse sélectivement les billes (15) du plateau fournisseur (20) dans le plateau-support (10) pour former les lettre Braille.

6. Procédé selon la revendication 5, pour recopier une première planche d'impression Braille sur une seconde planche d'impression Braille, caractérisée en ce qu'on place sur le plateau fournisseur (20) la première planche d'impression Braille au lieu du plateau de guidage (30), et on appuie sur la première planche pour chasser sélectivement les billes (15) du plateau fournisseur (20) dans le plateau-support (10) de la seconde planche d'impression Braille.

## F I G. 1

## F I G. 2

# FIG. 3

(A)

(B)

(C)

(D)

EP 0 169 959 B1

FIG. 4

30
31
23
20
22
21
15
10
11
12

3

*FIG. 5*

(A)

15    31    23   15    30

40

20

10

40

40     12     11    22

(B)

31   23     23     30

40

20

40

12    15     15    10

(C)

16     11     11

12    15    17    15    10

# F I G. 6